# EUROPÄISCHE PATENTSCHRIFT

(11) **EP 3 612 795 B1**
(45) Veröffentlichungstag und Bekanntmachung des Hinweises auf die Patenterteilung: **28.06.2023**
(21) Anmeldenummer: 18726717.4
(22) Anmeldetag: 17.04.2018
(51) Int. Cl.: G01B 11/30, G01N 21/89, G01N 21/898, B23K 20/12, B24B 49/12, B23K 31/12

(54) **VORRICHTUNG UND VERFAHREN ZUR KONTROLLIERTEN STEUERUNG DES BEARBEITUNGSPROZESSES VON, DIE OBERFLÄCHE EINES WERKSTÜCKS BEARBEITENDEN ANLAGEN, INSBESONDERE BREITBANDSCHLEIFMASCHINEN, UNTER BERÜCKSICHTIGUNG SICHERHEITSRELEVANTER LANGZEITASPEKTE**
DEVICE AND METHOD FOR THE MONITORED CONTROL OF THE MACHINING PROCESS OF SYSTEMS MACHINING THE SURFACE OF A WORKPIECE, IN PARTICULAR WIDE-BAND GRINDING MACHINES, WHILST TAKING SAFETY-RELEVANT LONG-TERM ASPECTS INTO ACCOUNT
DISPOSITIF ET PROCÉDÉ PERMETTANT DE COMMANDER DE MANIÈRE CONTRÔLÉE LE PROCESSUS D'USINAGE DE SYSTÈMES USINANT LA SURFACE D'UNE PIÈCE, EN PARTICULIER DE MACHINES À MEULER À LARGE BANDE, EN PRENANT EN COMPTE DES ASPECTS DE SÉCURITÉ À LONG TERME

(30) Priorität: 18.04.2017 DE 102017003757
(43) Veröffentlichungstag der Anmeldung: 26.02.2020
(73) Patentinhaber: Grenzebach Maschinenbau GmbH, 86663 Asbach-Baeumenheim (DE)
(72) Erfinder: SCHWAB, Leonard, 80689 München (DE); AICHELE, Thomas, 86551 Aichach (DE)
(74) Vertreter: Kindermann, Peter
(86) Internationale Anmeldenummer: PCT/DE2018/000106
(87) Internationale Veröffentlichungsnummer: WO 2018/192596

(56) Entgegenhaltungen:
- EP-A1- 2 703 110
- WO-A1-2008/031621
- DE-A1-102007 008 768
- DE-C1- 19 609 045
- US-A- 5 252 836
- US-A1- 2014 218 504

## Beschreibung

Die Anmeldung betrifft eine Vorrichtung und ein Verfahren zur kontrollierten Steuerung des Bearbeitungsprozesses von, die Oberfläche eines Werkstücks bearbeitenden Anlagen, insbesondere Breitbandschleifmaschinen, unter Berücksichtigung sicherheitsrelevanter Langzeitaspekte.

Durch die voranschreitende Automatisierung in der Fertigung sowie steigenden Qualitätsanforderungen an die erzeugten Produkte erhält die zeitnahe Prüfung und Inspektion der Produkte eine wachsende Bedeutung. So ist es einerseits oft erforderlich Fehler oder Fehlerstellen auf Oberflächen sicher identifizieren zu können und andererseits ist es ebenso erforderlich qualitätsrelevante Fehler und Fehlstellen von typischen prozessbedingten und tolerierbaren Defekten zu unterscheiden.

Zu den qualitätsrelevanten Fehlern können beispielsweise Lunker, Poren und Kratzer zählen, während etwa anfliegende Schmutzpartikel häufig kein qualitätsentscheidendes Kriterium darstellen, da sie prozessbedingt auftreten und in späteren Reinigungsprozessen wieder entfernt werden können.

Zum Stand der Technik wird beispielsweise aus dem Gebiet der Bearbeitung von Holzoberflächen auf das Dokument WO 2008/031621 A1 verwiesen, das ein Verfahren und eine Anordnung zur automatischen optischen Inspektion von Natur-Holz- Oberflächen betrifft.

Gemäß dieser Druckschrift besteht ein hohes technisches und wirtschaftliches Interesse an einer multisensoriellen Kamera-basierten Inspektion von Naturholzoberflächen, welche die in diesem Dokument beschriebenen Nachteile, insbesondere bei der Inspektion von breiten Produkten, nicht aufzeigt.

Im Anspruch 1 der Druckschrift WO 2008/031621 A1 wird zur Lösung dieses Probliems ein Verfahren beansprucht zur automatischen optischen Inspektion von Nutzholzoberflächen in der Produktionslinie, wobei folgende Merkmale beansprucht werden. Nämlich, dass eine zu inspizierende Oberfläche (12) mit einer unter einem flachen Winkel aufprojizierten Beleuchtungslinie beleuchtet wird, dass eine Zeilenkamera (20) das an der Oberfläche unter im Wesentlichen demselben Winkel reflektierte Licht erfasst, und dass mit Verfahren der Bildverarbeitung und Mustererkennung aus einem von der Zeilenkamera (20) erzeugten Grauwertbild lokale physikalische Eigenschaften der Oberfläche extrahiert werden;
dass mit Verfahren der Bildverarbeitung und Mustererkennung aus einem von der UV - empfindlichen Kamera (32) erzeugten Grauwertbild derjenigen lokalen physikalischen Eigenschaften der Oberfläche extrahiert werden, welche zu einer zu kurzen Wellenlänge hin ansteigenden Rückstreuung des UV-Lichts führen, und die aus beiden Grauwertbildern extrahierten Eigenschaften kombiniert werden und daraus eine Qualitätsbewertung der Holzoberfläche berechnet wird.

Aus der den Oberbegriff des Patentanspruchs 1 bildenden Druckschrift US 2014/218504 A1 ist eine Vorrichtung und ein Verfahren zur kontrollierten Steuerung des Bearbeitungsprozesses von, die Oberfläche eines Werkstücks bearbeitenden Anlagen, insbesondere Breitbandschleifmaschinen bekannt, wobei eine Transversalschiene ein Produkt überbrückt und die Oberfläche des Produkts unter der Transversalschiene während eines Bearbeitungsprozesses vorbei bewegt wird. Auf der Transversalschiene befindet sich ein Beleuchtungs-Schlitten mit einer Beleuchtungseinrichtung und einer zugehörigen Steuerung zur Beleuchtung des Produkts mittels eines schräg zur Transversalschiene verlaufenden Strahlengangs in einem linear quer zur Bearbeitungsrichtung verlaufenden Messbereich. Ferner kann eine Höhen-Versteileinrichtung der Beleuchtungseinrichtung zur Anpassung des Messbereichs an die Dicke des Objekts, den Strahlengang und die beleuchtende Fläche des Produkts vorgesehen sein. Eine Vorrichtung ermöglicht die Auswertung der durch die Beleuchtungseinrichtung verursachten Schatten an der Oberfläche des Produkts sowie die Erzeugung eines Oberflächen-Analyse-Signals.

Aus der Druckschrift US 5 252 836 A ist eine Vorrichtung und ein Verfahren zum Erfassen einer Oberflächenstruktur bekannt, wobei eine Lichtquelle ein kollimiertes Strahlenbündel auf eine zu untersuchende Oberfläche richtet und ein erster Strahlendetektor die entsprechend dem Einfallswinkel reflektierten Strahlen aufnimmt, während ein zweiter Detektor im Wesentlichen entlang des einfallenden Strahlenbündels angeordnet ist und diffuses Licht aufnimmt. Die von den beiden Detektoren erfasste Lichtintensität wird anschließend zur Erfassung einer Oberflächenstrukturstörung herangezogen.

Aus der Druckschrift DE 10 2007 008 768 A1 ist ein weiteres herkömmliches Verfahren zum Erfassen periodischer Strukturen in der Oberfläche eines Werkstücks bekannt, wobei eine Basisplatte über Schwingungsdämpfern auf einer Aufstellfläche ruht und bei der Auswertung eine Fourier-Transformation angewendet werden kann.

Schließlich ist aus der Druckschrift DE 196 09 045 C1 ein Verfahren und eine Vorrichtung zur optischen Prüfung eines Holzprüflings bekannt, wobei der Prüfling mit drei unterschiedlichen Beleuchtungsvorrichtungen mit unterschiedlicher, sich nicht überlappender Wellenlänge beleuchtet und von einer Kamera aufgenommen wird.

Der Erfindung liegt daher die Aufgabe zugrunde eine Vorrichtung und ein Verfahren zur kontrollierten Steuerung eines Bearbeitungsprozesses zu schaffen, wobei auch noch nach langer Betriebszeit ein sicherer Betrieb gewährleistet und ein schneller Austausch von Kameras ermöglich ist.

Erfindungsgemäß wird diese Aufgabe hinsichtlich der Vorrichtung durch die Merkmale des Patentanspruchs 1 und hinsichtlich des Verfahrens durch die Maßnahmen des Patentanspruchs 4 gelöst.

In den Unteransprüchen sind weitere vorteilhafte Ausgestaltungen der Erfindung gekennzeichnet.

Die erfindungsgemäße Vorrichtung wird im Folgenden näher beschrieben.

Es zeigen im Einzelnen:
Fig.1: eine Schnittdarstellung einer erfindungsgemäßen Schleif-Anordnung,
Fig.2: eine Draufsicht auf eine erfindungsgemäße Schleif-Anordnung,
Fig.3: eine Darstellung einer Beleuchtungseinrichtung,
Fig.4: eine Darstellung einer Kameraeinrichtung,
Fig.5: die Darstellung eines gescannten Oberflächenbildes mit Mustersignalen bei normalem Betrieb und bei defektem Beleuchtungselement,
Fig.6: eine Darstellung des Abtastvorgangs, und
Fig.7: eine Darstellung eines generellen Analysevorgangs.

Breitbandschleifmaschinen für die Holzstoffindustrie stellen dem Anwender nur beschränkt Angaben über den Systemzustand zur Verfügung. Mit der Sensorik auf der Grundlage des erfindungsgemäßen Scanners sollen die Ausprägungen und Frequenzen von sogenannten Rattermarken sowie von Rauheitswerten ermittelt werden. Rattermarken sind hier mehr oder weniger regelmäßig auftretende wellenförmige, flache Vertiefungen die quer zur Laufrichtung des zu bearbeitenden Werkstücks auftreten und generell eine dynamische Instabilität des Zerspanungsprozesses bedeuten. Breitbandschleifmaschinen zeigen im Betrieb Schwingungen, die bei mehreren simultan-sequentiellen Bearbeitungen auf der gleichen Platte und einer starken, prozessbedingten Dämpfung mehr oder weniger ausgeprägte Rattermarken hinterlassen. Durch die systematische Erfassung und Auswertung solcher Unregelmäßigkeiten im Produktionsprozess, hier eines Schleifprozesses, soll eine verbesserte Prozesssteuerung erreicht werden.

Rattermarken können in der Rohplatte, also der nicht beschichteten Platte, schlecht erkannt werden. Zudem lassen die steigenden Prozessgeschwindigkeiten bis zu 120 Meter pro Minute eine hundertprozentige Beurteilung der geschliffenen Oberfläche nicht zu. Mit technischen Maßnahmen ist Rattern nicht nur erkennbar, die Ursachen lassen sich zudem zuordnen. Aufgrund des Rauheitswerts lassen sich Rückschlüsse ziehen, ob einzelne Prozesseinstellungen richtig gewählt wurden. Zudem ist die Rauigkeit stark von der Standzeit der Schleifbänder abhängig, weshalb das frühzeitige Erkennen des Standzeitendes der Schleifbänder möglich ist.

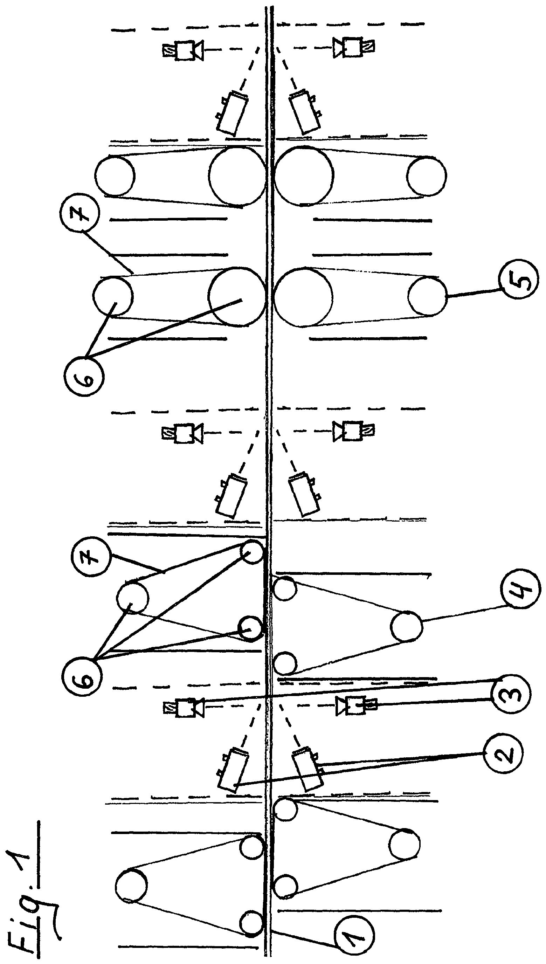

Fig.1 zeigt eine Schnittdarstellung einer erfindungsgemäßen Schleif-Anordnung. Das zu bearbeitende Produkt 1 kann zum Beispiel eine beschichtete oder unbeschichtete Holzplatte sein, die im Laufe eines Fertigungsprozesses einem Schleifprozess an der Oberseite und an der Unterseite unterzogen wird. In der gezeigten Darstellung sind in diesem Fall drei Bearbeitungsbereiche mit Schleifband-Walzen 6 gezeigt, wobei der, von links her gesehene, letzte Bereich eine besondere Walzenanordnung aufweist. Diese wird als 2-Walzen Schleifkopf 5 bezeichnet und die vorderen Bereiche werden als 3-Walzen Schleifkopf 4 geführt. Bei allen Schleifköpfen sind die Schleifbänder mit 7 bezeichnet.

Zwischen den gezeigten einzelnen Bearbeitungsbereichen, das heißt nach jedem Arbeitsbereich sind zur Kontrolle jeweils Bereiche mit einem Infrarot-LED-Beleuchtungselement 2 in Verbindung mit einer Kamera 3 geschaltet.

Wie oben schon erklärt, findet die Bearbeitung des Produkts 1 gleichzeitig an der Oberseite und an der Unterseite statt.

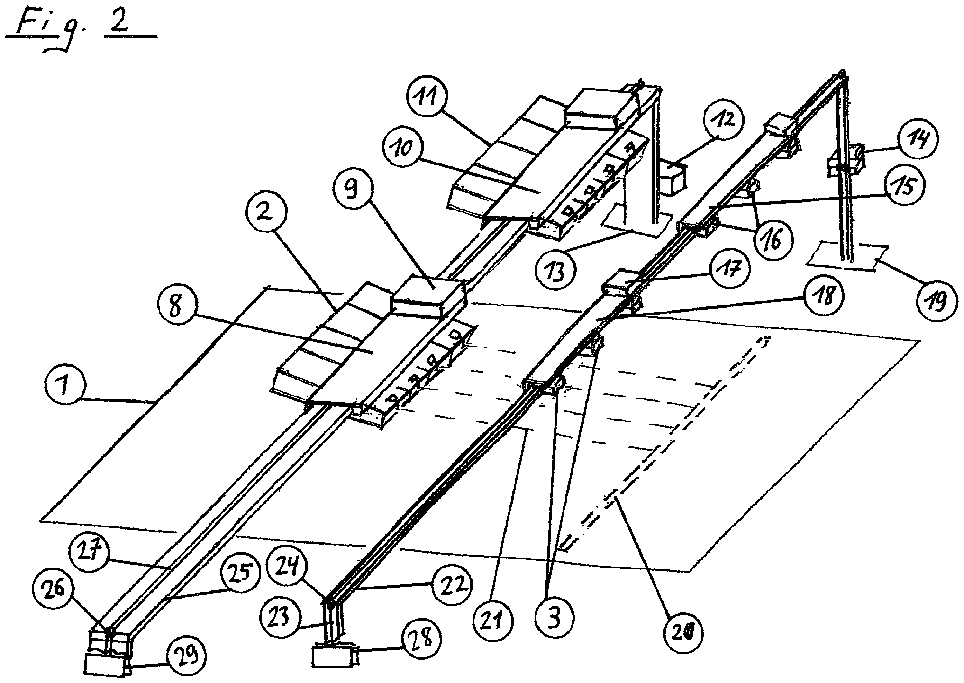

Die Fig.2 zeigt eine Draufsicht auf eine erfindungsgemäße Schleif-Anordnung.

Über dem Produkt 1 sind, quer zur Laufrichtung der zu schleifenden Platte, eine Transversalschiene 22 für einen Kameraschlitten 18 mit Kameras 3 und einen Ersatz-Kameraschlitten 15 mit Ersatz-Kameras 16 zu sehen. Zur Verschiebung des Kameraschlittens 18 mit der Steuerung 17 auf der Transversalschiene 22 dient ein Synchron-Kettenantrieb 14 auf der einen Seite und ein Spanngewicht 28 für eine betreffende Zugkette 23 mit einer Umlenkung 24 ab der Transversalschiene 22 auf der anderen Seite. Anstelle des Synchron-Kettenantriebs 14 sind auch andere bekannte Antriebsverfahren denkbar. Insofern ist dieser Antrieb rein beispielhaft.

Parallel zu der Transversalschiene 22 sind auf dem Produkt 1 in Form der gezeigten Platte ein Messbereich 20 zu sehen, der im Wesentlichen quer zu einem Strahlengang 21 des LED-Lichts verläuft. Die Transversalschiene 22 weist ein Schwingungs-entkoppeltes Fundament 19 auf.

Weiter verläuft parallel zur Laufrichtung der Transversalschiene 22 eine Transversalschiene 25 für einen Beleuchtungsschlitten 8 mit dem Beleuchtungselement 2, deren Steuerung 9 und den Ersatzschlitten 10 und einer dargestellten Ersatz-Beleuchtungseinrichtung 11. Auch hier dient ein Synchron-Kettenantrieb 12 für eine Zugkette 27 mit dem Spanngewicht 29 und einer Umlenkung 26 an der Transversalschiene 25 der gesteuerten Bewegung der Beleuchtungselemente 2. Ein Schwingungs-entkoppeltes Fundament 13 sichert die Laufruhe und Sicherheit der Bewegung der Beleuchtungelemente 2, außerdem werden die Schwingungen der Schleifanlage nicht auf die Messanlage übertragen. Entsprechendes gilt natürlich für das Fundament 19. Der entsprechende Teil des jeweiligen Fundaments auf der anderen Seite wurde jeweils aus Gründen der Darstellung nicht gezeigt.

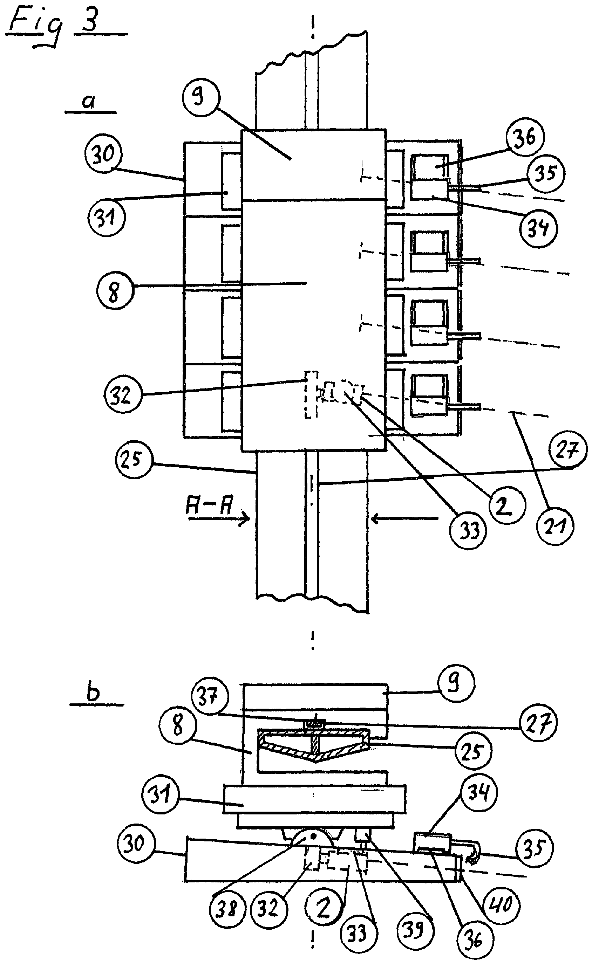

Fig.3 zeigt eine Darstellung einer Beleuchtungseinrichtung.

In der Fig.3a ist im Detail der Schlitten 8 für die Beleuchtungseinrichtung mit deren Steuerung 9 auf der Transversalschiene 25 gezeigt. Hierbei ist an einem Grundkörper 30 eine Höhen-Versteileinrichtung 31 bezeichnet, wobei an diesem Teil der Beleuchtungseinrichtung eine Reinigungsvorrichtung 34 mit einer Reinigungsdüse 35 einer später erklärten Schutzscheibe 40 besonders herausgestellt ist. Die Reinigungsdüse 35 kann hierbei mittels einer Verschiebe-Einrichtung 36 über die zu reinigende Fläche der Schutzscheibe 40 während des Reinigungsvorgangs verschoben werden. Weiter ist in dieser Abbildung eine Aufhängung 33 eines einzelnen Beleuchtungselements 2 mit einer zugehörigen horizontalen Verstelleinrichtung 32 gezeigt. Der Strahlengang 21 des Infrarot-Lichts ist hier nochmals dargestellt. In der Längsachse der Transversalschiene 25 ist die Zugkette 27 im Kettenkanal 37 für den Beleuchtungsschlitten 8 gezeigt, die in der Fig.3b im Querschnitt, in der Transversalschiene 25 verlaufend, im Bereich des Beleuchtungsschlittens 8 und der Steuerung 9 zu sehen ist. Die Höhen-Verstelleinrichtung 31 für die Beleuchtungseinrichtung ist mittels der Kippvorrichtung 38 und deren Antrieb 39 auf dem Grundkörper 30 befestigt. Diese Höhen-Verstelleinrichtung 31 dient der Anpassung der gesamten Anlage an unterschiedliche Plattendicken und daraus resultierende verschiedene Winkel des Strahlengangs 21 beim Auftreffen auf die Platte. Im Schnitt ist im Grundkörper 30 weiterhin das Beleuchtungselement 2 mit einer einzelnen Aufhängung 33, einer Reinigungsdüse 35, einer Reinigungsvorrichtung 34 und deren Verschiebe-Einrichtung 36 gezeigt. Hier ist im Querschnitt die weiter oben erwähnte optische Schutzscheibe 40 dargestellt. Die Oberfläche dieser Schutzscheibe 40 ist derart behandelt, dass Anhaftungen von Schmutzpartikeln nach dem sog. Lotus-Effekt weitgehend verhindert werden.

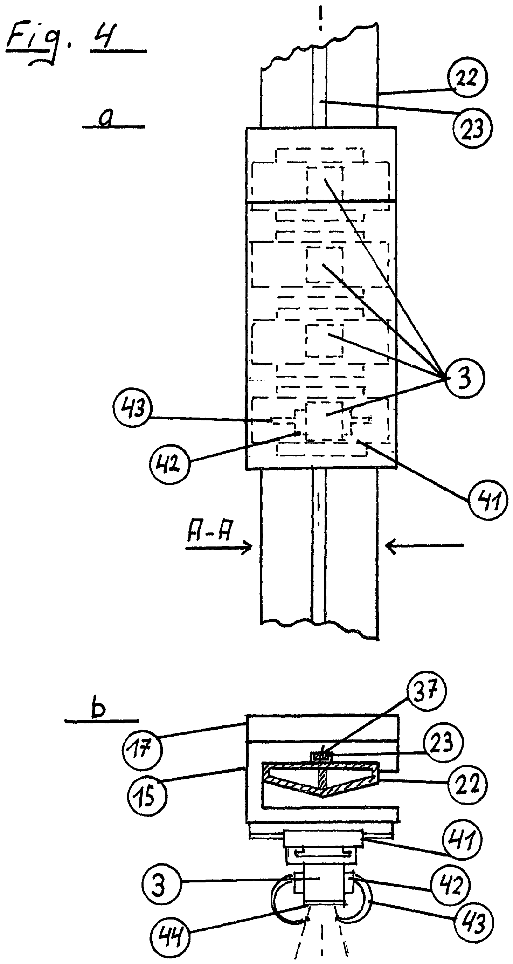

Fig.4 zeigt eine Darstellung einer Kameraeinrichtung.

In der Fig.4b ist in Längsrichtung die Transversalschiene 22 mit der Zugkette 23 und der installierten Kamera-Justiervorrichtung 41 mit den vier Kameras 3 dargestellt. Ebenso ist eine jeweils vorhandene Reinigungseinrichtung 42 mit einer Reinigungsdüse 43 zu sehen.

In der Fig. 4b sind im Querschnitt unter der Kamera-Steuerung 17 der Ersatz-KameraSchlitten 15 auf der Transversalschiene 22 und der Zugkette 23 zu erkennen. Im unteren Teil der Fig.4b ist die Kamera-Justiervorrichtung 41 mit einer Kamera 3 und ihrem jeweiligen Objektiv mit einer Reinigungseinrichtung 42 und einer Reinigungsdüse 43 dargestellt. Auch hier ist jeweils vor jeder Kamera 3 eine Schutzscheibe 44 mit einer Lotus-Effekt-Beschichtung installiert. Zusätzlich ist jeweils zum Schutz gegen Fremdlicht ein Infrarot-Pass-Filter angebracht.

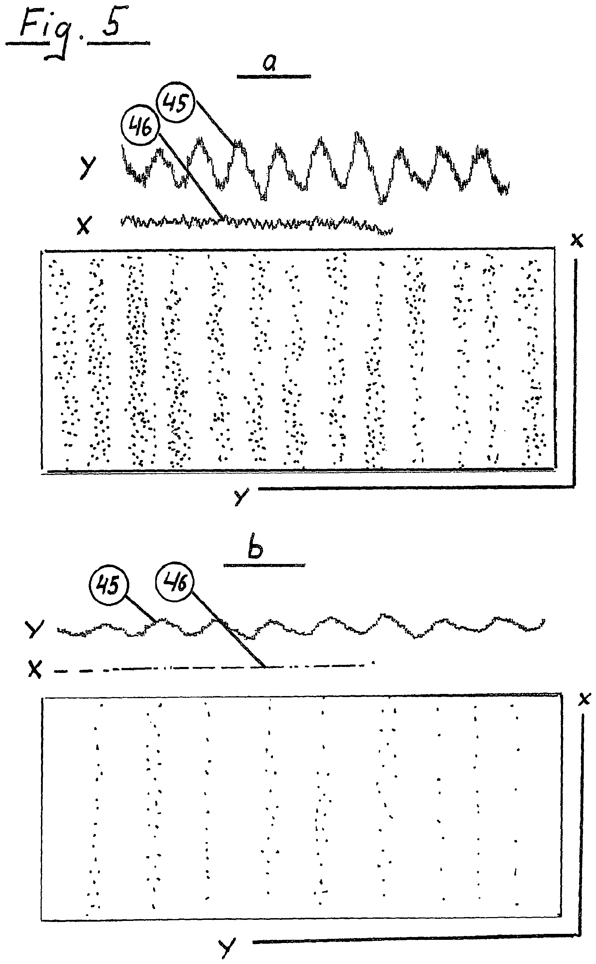

Fig.5 zeigt die Darstellung eines gescannten Oberflächenbildes mit Mustersignalen bei normalem Betrieb und bei defekten Beleuchtungselementen.

In der Fig.5a ist mit 45 das Signal eines Y-Musters einer normalen Detektion von Rattermarken der Oberfläche einer bearbeiteten Platte dargestellt. Mit 46 ist das hierzu gehörige Mustersignal der Rauheit zu sehen.

In der Fig.5b sind die entsprechenden Mustersignale und deren gescanntes Bild bei defekten Beleuchtungselementen zu sehen.

Aus dem, zu dem jeweiligen Zeitpunkt ermittelten, Zeilenbild wird im Laufe des Verarbeitungsprozesses ein Flächenbild generiert, welches mittels zweier unterschiedlicher Algorithmen vorverarbeitet wird und dann in X-Richtung und in Y-Richtung unterschiedlich ausgewertet wird. Es werden hierbei die Schatten, die die Beleuchtungselemente 2 erzeugen, ausgewertet und durch die Grauwert-Auswertung wird mit den unterschiedlichen Algorithmen ein 3D-Oberflächenprofil erkannt. Durch die Streulicht-Intensität können hierbei lokale Oberflächenfehler erkannt werden. Die Rattermarken werden mit dem Mittelwert der Intensität über die Y-Richtung (Signal 45), und deren Fourier-Transformation korreliert. Aufgrund der Frequenzanteile der Rattermarken kann man ermitteln was die Ursache für die Entstehung der Rattermarken ist. Rauheitswerte werden anhand des Signals 46 anhand der Höhe und Häufigkeit von Signalvariationen lokal (ortsaufgelöst) ermittelt. Hieraus ergeben sich nützliche Hinweise für die Hersteller der Bandschleifmaschinen. Aus dem oben beschriebenen Grauwertbild werden analysierte Werte in so genannte Kennzahlen umgewandelt, nachdem entsprechende Profile sichtbar gemacht wurden. Diese Kennzahlen sind für den jeweiligen Arbeitsprozess kennzeichnend. So ist zum Beispiel die Kennzahl für die Homogenität der Rauheit über die gesamte Breite der Platte ein entsprechender Hinweis für den Hersteller der gesamten Anlage.

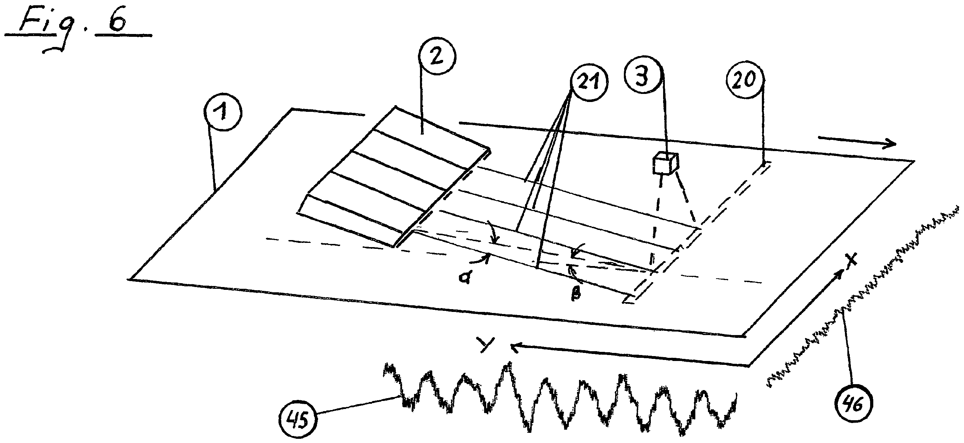

Fig.6 zeigt eine Darstellung des Abtastvorgangs.

Auf der Oberfläche des Produkts 1, zum Beispiel einer Holzplatte, sind stilisiert in einer bestimmten Höhe die Beleuchtungselemente 2 mit jeweils einem entsprechenden Strahlengang 21 dargestellt. Das schräge Auftreffen des Strahlengangs 21 in Bezug zur Laufrichtung der Platte 1 wird durch den Winkel α gekennzeichnet. Das schräge Auftreffen des Strahlengangs senkrecht zur Laufrichtung der Platte wird durch den Winkel β gekennzeichnet. Eine Kamera 3 observiert den Messbereich 20.

In Laufrichtung des Produkts 1 wird in Y-Richtung das Muster 45 der Rattermarken detektiert und in X-Richtung quer hierzu das Muster 46 der Rauheit.

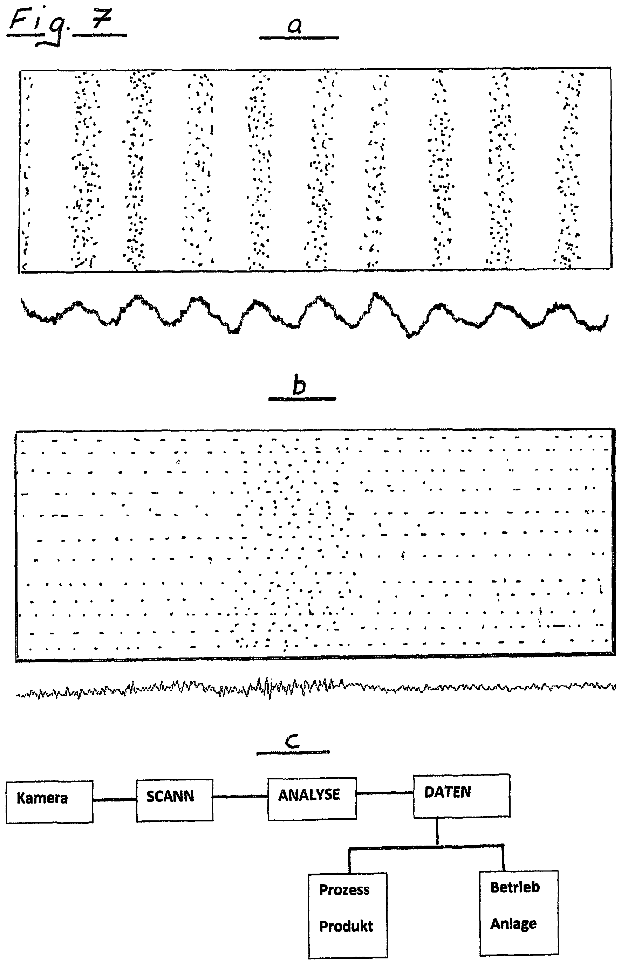

Fig.7 zeigt eine Darstellung eines generellen Analysevorgangs.

Die Fig.7a zeigt die generelle Darstellung von Rattermarken, wie sie auf jeder beliebigen Oberfläche auftreten können. Dasselbe gilt in der Fig.7b für die Darstellung von genereller Rauheit einer beliebigen Oberfläche. So ist die erfindungsgemäße Vorrichtung zum Beispiel für die Analyse einer Oberfläche anzuwenden die nach dem Vorgang des Rührreibschweißens zweier Fügepartner entstanden ist.

In der Fig.7c ist ein Signalfluß-Bild der bei dem erfindungsgemäßen Verfahren gewonnenen Daten zu sehen. Hier ist noch einmal klargestellt, dass die während des jeweiligen Fertigungsprozesses gewonnenen Daten sowohl für die eigentliche Prozess-Steuerung als auch für die Vervollkommnung der jeweiligen Anlage verwendet werden können.

### Bezugszahlenliste

- 1: Produkt (zum Beispiel eine Holzplatte )
- 2: Beleuchtungselement
- 3: Kamera
- 4: 3-Walzen Schleifkopf
- 5: 2-Walzen Schleifkopf
- 6: Schleifband-Walzen
- 7: Schleifband
- 8: Schlitten für die Beleuchtungseirichtung mit Beleuchtungselementen 2
- 9: Steuerung für die Beleuchtungseinrichtung
- 10: Ersatzschlitten für die Beleuchtungseinrichtung
- 11: Ersatz für die Beleuchtungseinrichtung
- 12: Synchron-Kettenantrieb für eine Schlittenverschiebung der Beleuchtungselemente
- 13: Schwingungs-entkoppeltes Fundament
- 14: Synchron-Kettenantrieb für die Verschiebung des Kameraschlittens
- 15: Ersatz-Kameraschlitten
- 16: Ersatz-Kamera
- 17: Kamera-Steuerung
- 18: Kameraschlitten für Kameraeinrichtung
- 19: Schwingungs-entkoppeltes Fundament (Aufhängung) für Kameraeinrichtung
- 20: Messbereich
- 21: Strahlengang des Infrarot-LED-Lichts
- 22: Transversalschiene für den Kameraschlitten und Zubehör
- 23: Zugkette für den Kameraschlitten
- 24: Umlenkung der Transversalschiene für den Kameraschlitten
- 25: Transversalschiene für den Beleuchtungsschlitten
- 26: Umlenkung der Transversalschiene für den Beleuchtungsschlitten
- 27: Zugkette für den Beleuchtungsschlitten
- 28: Spanngewicht für die Zugkette der Kameraschlitteneinrichtung
- 29: Spanngewicht für die Zugkette der Beleuchtungsschlitteneinrichtung
- 30: Grundkörper
- 31: Höhen-Versteileinrichtung für die Beleuchtungseinrichtung
- 32: Horizontale Versteileinrichtung für ein einzelnes Beleuchtungselement
- 33: Aufhängung eines einzelnen Beleuchtungselements
- 34: Reinigungsvorrichtung für die Schutzscheibe 40
- 35: Reinigungsdüse
- 36: Verschiebe-Einrichtung für eine Reinigungsdüse
- 37: Kettenkanal im Verschiebeschlitten 8 für die Beleuchtungseinrichtung
- 38: Kippvorrichtung für den Grundkörper 30
- 39: Antrieb für die Kippvorrichtung 38
- 40: Optische Schutzscheibe (Lotus-Effekt)
- 41: Kamera-Justiervorrichtung
- 42: Reinigungseinrichtung für Kamera
- 43: Reinigungsdüse für Kamera
- 44: Schutzscheibe für Kameraoptik (Lotus-Effekt)
- 45: Y-Muster einer Rattermarken-Detektion
- 46: X-Muster einer Rauheits-Detektion

## Patentansprüche

1. Vorrichtung zur kontrollierten Steuerung des Bearbeitungsprozesses von, die Oberfläche eines Werkstücks bearbeitenden Anlagen, insbesondere Breitbandschleifmaschinen, unter Berücksichtigung sicherheitsrelevanter Langzeitaspekte mit:
einer ersten Transversalschiene (25) zur Überbrückung eines Produkts (1), wobei die Oberfläche des Produkts (1) unter der ersten Transversalschiene (25) während eines Bearbeitungsprozesses vorbei bewegt wird, und wobei auf der ersten Transversalschiene (25) ein Beleuchtungs-Schlitten (8) mit einer Beleuchtungseinrichtung (2) und eine Steuerung (9) für die Beleuchtungseinrichtung (2) vorgesehen ist, zur Beleuchtung des Produkts (1) mittels eines schräg zur ersten Transversalschiene (25) verlaufenden Strahlengangs (21) in einem linear quer zur Bearbeitungsrichtung verlaufenden Messbereich (20),
einer Höhen-Verstelleinrichtung (31) der Beleuchtungseinrichtung (2) zur Anpassung des Messbereichs (20) an die Dicke des Objekts (1), den Strahlengang (21) und die beleuchtende Fläche des Produkts (1), und
einer Vorrichtung zur Auswertung der durch die Beleuchtungseinrichtung (2) verursachten Schatten an der Oberfläche des Produkts (1) und zur Erzeugung eines Oberflächen-Analyse-Signals,
**gekennzeichnet durch**
eine in Richtung der Bewegung des Produkts (1) parallel zur ersten Transversalschiene (25) sich erstreckende und das Produkt (1) überbrückende, weitere zweite Transversalschiene (22), wobei die zweite Transversalschiene (22) einen Kameraschlitten (18) und einen Ersatz-Kameraschlitten (15) mit jeweils einer Kamera-Steuerung (17) trägt, die jeweils eine Mehrzahl von Kameras (3, 16) zum optischen Aufzeichnen des Messbereichs (20) aufweisen, und
eine Steuerungsvorrichtung zur Steuerung des Bearbeitungsprozesses basierend auf dem Oberflächen-Analyse-Signal, und
wobei die Vorrichtung weiterhin konfiguriert ist, nach der Beendigung des Bearbeitungsprozesses entsprechende Betriebsdaten zur grundlegenden Verbesserung des Bearbeitungsprozesses und der Bearbeitungsanlage heranzuziehen.

2. Vorrichtung nach Anspruch 1,
**dadurch gekennzeichnet,**
**dass** die erste Transversalschiene (25) und die zweite Transversalschiene (22) jeweils auf beiden Seiten auf Schwingungsentkoppelten Fundamenten (13, 19) gelagert sind.

3. Vorrichtung nach Anspruch 1 oder 2,
**dadurch gekennzeichnet,**
**dass** die erste Transversalschiene (25) einen Ersatz (11) für die Beleuchtungseinrichtung (2) aufweist.

4. Verfahren zur kontrollierten Steuerung einer Vorrichtung gemäß einem der Patentansprüche 1 bis 3,
umfassend die Schritte einer mittels der Höhen-Versteileinrichtung (31) angepassten Einstellung der Beleuchtung an die Höhenlage der zu bearbeitenden Oberfläche,
einer Erfassung der jeweiligen Oberfläche und Verwertung des dabei ermittelten Oberflächen-Analyse-Signals zur Steuerung des Bearbeitungsprozesses, und
nach Beendigung des Bearbeitungsprozesses ein Heranziehen entsprechender Betriebsdaten zur grundlegenden Verbesserung des Bearbeitungsprozesses und der Bearbeitungsanlage.

5. Verfahren nach Anspruch 4,
**dadurch gekennzeichnet,**
**dass** es bei einem Rührreibschweißen verwendet wird.

## Claims

1. Apparatus for monitored control of the processing process of systems processing the surface of a workpiece, in particular wide belt sanders, taking into account safety-relevant long-term aspects, comprising:
a first transverse rail (25) for bridging over a product (1), wherein the surface of the product (1) is moved past during a processing process underneath the first transverse rail (25) and wherein an illumination carriage (8) having an illumination device (2) and a controller (9) for the illumination device (2) is provided on the first transverse rail (25) for illuminating the product (1) by means of a beam path (21) running obliquely to the first transverse rail (25) in a measurement region (20) extending linearly transversely to the processing direction,
a height adjustment device (31) of the illumination device (2) for adapting the measurement region (20) to the thickness of the object (1), the beam path (21) and the illuminating surface of the product (1), and
an apparatus for evaluating the shadows caused by the illumination device (2) on the surface of the product (1) and for generating a surface analysis signal,
**characterized by**
a further, second transverse rail (22), which extends in the direction of the movement of the product (1) parallel to the first transverse rail (25) and bridges over the product (1), wherein the second transverse rail (22) carries a camera carriage (18) and a replacement camera carriage (15) with in each case a camera controller (17), each having a plurality of cameras (3, 16) for optically recording the measurement region (20), and
a control apparatus for controlling the processing process on the basis of the surface analysis signal, and
wherein the apparatus is furthermore configured to use, after the processing process has finished, corresponding operating data for fundamentally improving the processing process and the processing system.

2. Apparatus according to Claim 1,
**characterized**
**in that** the first transverse rail (25) and the second transverse rail (22) are each supported on both sides on vibration-decoupled foundations (13, 19).

3. Apparatus according to Claim 1 or 2,
**characterized**
**in that** the first transverse rail (25) has a replacement (11) for the illumination device (2).

4. Method for the monitored control of an apparatus according to any of Patent Claims 1 to 3,
comprising the steps of
setting the illumination in a manner adapted to the height position of the surface to be processed by means of the height adjustment device (31),
capturing the respective surface and evaluating the surface analysis signal ascertained in the process to control the processing process, and,
after the processing process has finished, using corresponding operating data for fundamentally improving the processing process and the processing system.

5. Method according to Claim 4,
**characterized**
**in that** it is used in friction stir welding.

## Revendications

1. Dispositif, permettant de commander de manière contrôlée le processus d'usinage d'installations usinant la surface d'une pièce, notamment de ponceuses à large bande, sous prise en compte d'aspects de sécurité à long terme, comprenant :
une première glissière transversale (25), destinée à enjamber un produit (1), la surface du produit (1) étant déplacée en long sous la première glissière transversale (25) pendant un processus d'usinage, et sur la première glissière transversale (25) étant prévus un chariot d'éclairage (8), pourvu d'un système d'éclairage (2) et un système de commande (9) pour le système d'éclairage (2), pour éclairer le produit (1) au moyen d'une trajectoire de faisceau (21) s'écoulant en oblique par rapport à la première glissière transversale (25) dans un champ de mesure (20) s'écoulant sous forme linéaire à la transversale de la direction d'usinage,
un système d'ajustage en hauteur (31) du système d'éclairage (2), destiné à adapter le champ de mesure (20) à l'épaisseur de l'objet (1), à la trajectoire de faisceau (21) et à la surface du produit (1) qui doit être éclairée, et
un dispositif, destiné à évaluer l'ombre générée par le système d'éclairage (2) sur la surface du produit (1) et à générer un signal d'analyse de surface,
**caractérisé par**
une autre, deuxième glissière transversale (22), s'étendant dans la direction de déplacement du produit (1), à la parallèle de la première glissière transversale (25) et enjambant le produit (1), la deuxième glissière transversale (22) portant un chariot-caméra (18) et un chariot-caméra (15) de substitution, pourvus chacun d'un système de commande (17) de caméra, qui comportent chacun une pluralité de caméras (3, 16) pour l'enregistrement optique du champ de mesure (20), et
un dispositif de commande, destiné à commander le processus d'usinage, sur la base du signal d'analyse des surfaces, et
le dispositif étant configuré par ailleurs pour recourir après l'achèvement du processus d'usinage à des données opérationnelles correspondantes, pour l'amélioration substantielle du processus d'usinage et de l'installation d'usinage.

2. Dispositif selon la revendication 1,
**caractérisé**
**en ce que** la première glissière transversale (25) et la deuxième glissière transversale (22) sont logées chacune par les deux côtés sur des fondations (13, 19) à découplage vibratoire.

3. Dispositif selon la revendication 1 ou 2,
**caractérisé**
**en ce que** la première glissière transversale (25) comporte un substitut (11) pour le système d'éclairage (2).

4. Procédé, permettant de commander de manière contrôlée un dispositif selon l'une quelconque des revendications 1 à 3,
comprenant les étapes consistant dans
une adaptation adaptée de l'éclairage à la position en hauteur de la surface qui doit être usinée, au moyen du système d'ajustage en hauteur (31),
une détection de la surface concernée et une exploitation du signal d'analyse de surfaces déterminé à cet effet, pour commander le processus d'usinage, et
après l'achèvement du processus d'usinage, un recours à des données opérationnelles correspondantes, pour l'amélioration substantielle du processus d'usinage et de l'installation d'usinage.

5. Procédé selon la revendication 4,
**caractérisé**
**en ce qu'**il est utilisé lors d'un soudage par agitation-friction.
